# FASCICULE DE BREVET EUROPEEN

(11) **EP 2 481 932 B1**
(45) Date de publication et mention de la délivrance du brevet: **12.11.2014**
(21) Numéro de dépôt: 12153290.7
(22) Date de dépôt: 31.01.2012
(51) Int. Cl.: F15B 1/02, F15B 1/027, F15B 21/14

(54) **Dispositif de transmission hydraulique permettant la récupération d'énergie**
Hydraulische Übertragungsvorrichtung zur Energierückgewinnung
Hydraulic transmission device allowing the recovery of energy

(30) Priorité: 31.01.2011 FR 1150703
(43) Date de publication de la demande: 01.08.2012
(73) Titulaire: Poclain Hydraulics Industrie, 60410 Verberie (FR)
(72) Inventeur: Heren, Jean, 60280 MARGNY LES COMPIEGNE (FR)
(74) Mandataire: Intès, Didier Gérard André

(56) Documents cités:
- EP-A2- 1 433 648
- WO-A2-2008/012558
- FR-A1- 2 903 156

## Description

L'invention concerne un dispositif de transmission hydraulique apte à entraîner en rotation, et à freiner, un ou plusieurs organes rotatifs ; ces organes devant être entraînés en rotation puis arrêtés de nombreuses fois.

L'invention vise en particulier un dispositif utilisé pour mettre en rotation des masses excentrées, ainsi nommées car elles sont fixées de manière excentrée sur les arbres des billes d'un compacteur pour route. Lorsqu'elles sont mises en rotation autour de ces arbres, ces masses excentrées provoquent une vibration des billes du compacteur ; cette vibration permet de compacter la chaussée en cours de réalisation. Les vitesses de rotation requises sont importantes, et varient habituellement entre 2000 et 4200 tours par minute.

La qualité du compactage requiert un nombre d'impacts (correspondant aux tours effectués par les masses excentrées) par mètre donné, lors de l'avance du compacteur. Aussi, en fonction des variations de vitesse du compacteur, et notamment de ses arrêts, il faut être capable de faire varier très rapidement la vitesse de rotation des masses, et notamment d'arrêter très rapidement celles-ci.

Aussi dans un compacteur pour route, les masses excentrées doivent pouvoir être entraînées en rotation à vitesse élevée en un temps très faible, lors des phases d'accélération, pour faire vibrer les billes sur lesquelles elles sont montées. Ensuite, lors des phases d'arrêt, elles doivent pouvoir être arrêtées en un temps également très court.

Plus généralement, l'invention est applicable à tout dispositif hydrostatique devant assurer un entraînement alternatif, ou du moins découpé, c'est-à-dire présentant de nombreuses phases d'entraînement séparées par des arrêts. L'invention vise notamment des dispositifs dont l'entraînement doit être fait dans deux directions différentes, comme par exemple un banc de scie, la tourelle d'une pelleteuse, l'entraînement hydrostatique d'une machine faisant des va-et-vient, en circuit ouvert, etc.

Dans les compacteurs pour route, de manière connue l'entraînement des masses vibrantes est assuré par un dispositif comprenant plusieurs moteurs hydrauliques alimentés par une pompe. Lors des phases d'accélération, les masses vibrantes sont entraînées par le ou les moteurs. Lors de la phase d'arrêt, on fait circuler le fluide à travers le ou les moteurs, qui fonctionnent alors en tant que pompes ; le fluide ainsi pompé est contraint de circuler à travers des restrictions qui provoquent une perte de charge, dissipant ainsi l'énergie sous forme de chaleur. Le fluide est refroidi par un échangeur de chaleur pour éviter tout échauffement excessif. Le dispositif comporte en outre une pompe de gavage, pour alimenter le circuit en fluide à partir d'un réservoir sans surpression, et maintenir une pression minimale dans certaines parties du dispositif, et ainsi éviter tout risque de cavitation.

L'inconvénient d'un tel dispositif est qu'il consomme une grande quantité d'énergie, dissipée sous forme thermique lors de chaque phase d'arrêt, et nécessite en outre une pompe relativement importante de manière à assurer la rapidité de l'accélération lors des phases d'accélération.

Par ailleurs, pour entraîner des organes rotatifs par des moyens hydrauliques, avec un rendement énergétique satisfaisant, une solution connue consiste en un dispositif comprenant un ou plusieurs moteurs hydrauliques alimentés par une pompe, celle-ci étant reliée aux moteurs par un circuit fermé. Le circuit fermé est alimenté en fluide par une pompe de gavage. Pour économiser l'énergie, le dispositif comporte en outre au moins un accumulateur de fluide sous pression, disposé en dérivation sur la partie à haute pression du circuit fermé, dans lequel l'énergie cinétique des organes rotatifs peut être stockée puis restituée.

Un tel dispositif est divulgué par exemple par le document EP1433648, ou encore le document WO2008/012558. Avantageusement, il permet de récupérer l'énergie de rotation des organes rotatifs entraînés, via les moteurs fonctionnant en tant que pompes. L'énergie récupérée est stockée sous forme de fluide sous pression dans l'accumulateur.

Cependant, un tel dispositif est relativement complexe, ce qui le rend particulièrement coûteux.

Aussi, l'objectif de l'invention est de proposer un dispositif de transmission hydraulique, comprenant au moins un moteur hydraulique, une pompe hydraulique, un accumulateur de fluide apte à emmagasiner et délivrer du fluide sous pression ;
le dispositif étant apte à être opéré :
- dans un mode d'entraînement par l'accumulateur, dans lequel le fluide sous pression délivré par l'accumulateur est utilisé pour entraîner en rotation le moteur ;
- dans un mode de récupération d'énergie, dans lequel le moteur agissant en tant que pompe refoule du fluide dans l'accumulateur ; et
- dans un mode d'entraînement par la pompe, dans lequel ledit moteur est entraîné par du fluide refoulé par la pompe ;
dispositif de transmission hydraulique qui soit apte à entraîner en rotation ou à freiner, rapidement, un ou plusieurs organes rotatifs ; qui présente une structure simple, et un rendement énergétique relativement élevé.

Cet objectif est atteint grâce au fait que dans le dispositif, dans le mode d'entraînement par la pompe, la pompe alimente le moteur avec du fluide prélevé dans un réservoir sans surpression ; et dans le mode de récupération d'énergie, le moteur est alimenté par la pompe prélevant du fluide dans le réservoir.

Grâce aux deux modes d'entraînement indiqués précédemment, le dispositif permet l'entraînement d'un ou de plusieurs organes rotatifs.

Par ailleurs, avantageusement, le dispositif peut ne comporter qu'une seule pompe et un seul accumulateur. Il présente donc une structure relativement simple.

Enfin, la possibilité de récupération de l'énergie lui confère un rendement énergétique relativement élevé, en permettant la récupération de l'énergie dégagée lors du freinage.

Le dispositif selon l'invention peut être réalisé aussi bien avec un seul moteur hydraulique, qu'avec une pluralité de moteurs hydrauliques.

Cependant par souci de simplicité, dans ce qui suit l'invention est présentée principalement comme si le dispositif comprenait un unique moteur, attelé à un organe rotatif. Il faut bien noter cependant que la présentation qui suit est également intégralement applicable à un dispositif selon l'invention comprenant plusieurs moteurs. Toute référence à un moteur englobe donc également une référence à une pluralité de moteurs, ou encore une référence à 'au moins un moteur'.

Lorsque le dispositif selon l'invention comprend plusieurs moteurs, ceux-ci peuvent être associés de diverses manières. Dans un mode de réalisation par exemple, ces moteurs sont alimentés via un orifice d'alimentation unique et leurs échappements (qui désigne ici les flux de fluide s'échappant de ces moteurs) sont dirigés vers un orifice d'échappement unique. Les moteurs peuvent notamment être disposés en série le long d'une conduite de série.

Par ailleurs, dans le dispositif selon l'invention, le moteur hydraulique peut être en particulier un moteur hydraulique ayant deux orifices principaux, et dans lesquels le sens de circulation du fluide dans ces orifices impose le sens de rotation de l'organe de sortie du moteur.

L'invention peut cependant également être mise en oeuvre avec un moteur présentant également deux orifices principaux, mais dans lequel le sens de rotation de l'organe de sortie du moteur peut être fixé indépendamment du sens de circulation du fluide dans les orifices principaux de celui-ci.

Dans un mode de réalisation, le dispositif comporte un équipement de limitation de la pression qui :
- en mode d'entraînement par la pompe, limite la pression de fluide délivré par la pompe à un premier seuil ; et
- en mode de récupération d'énergie, limite la pression de fluide délivré par la pompe à un second seuil inférieur au premier seuil.

Dans cet équipement de limitation de la pression, les moyens permettant en mode d'entraînement par la pompe de maintenir la pression du fluide refoulé par la pompe en dessous du premier seuil sont agencés en général entre l'orifice de refoulement de la pompe et l'orifice d'alimentation du moteur. Ils peuvent consister notamment en un limiteur de pression, interposé entre l'orifice de refoulement de la pompe et le réservoir sans surpression. Ce limiteur est taré audit premier seuil, qui est fixé à une pression relativement haute, mais suffisamment basse néanmoins pour protéger la pompe et le ou les moteurs.

D'autre part, pour que l'organe rotatif attelé au moteur soit efficacement freiné, l'équipement de limitation de la pression astreint la pression d'alimentation du moteur à demeurer en dessous du second seuil, qui est fixé à une valeur inférieure au premier seuil.

Le second seuil est choisi inférieur à une pression habituelle d'alimentation du moteur lorsqu'il fonctionne en tant que moteur. Le second seuil peut être par exemple égal à 50 Bars, ou encore à 10 Bars.

L'équipement de limitation de la pression peut être réalisé de différentes manières.

La pression d'alimentation du moteur peut être limitée par un limiteur de pression interposé entre le conduit d'alimentation du moteur et le réservoir sans surpression.

Dans un premier mode de réalisation, l'équipement de limitation de la pression comporte deux limiteurs de pression, dont les valeurs de tarage correspondent respectivement aux premier et second seuils. On comprend que le dispositif est agencé de telle sorte que la pression du circuit d'alimentation en fluide du moteur par la pompe soit limitée par l'un ou l'autre de ces limiteurs, selon que le dispositif est en mode d'entraînement par la pompe ou en mode de récupération d'énergie.

Dans un second mode de réalisation, des moyens de réglage sont intégrés au limiteur de pression, qui est alors un limiteur de pression à tarage réglable. L'équipement de limitation de la pression comporte alors un limiteur de pression à tarage variable, lesdits premier et second seuils correspondant à des tarages différents dudit limiteur.

En outre, le dispositif peut être agencé de manière à permettre de moduler le couple de freinage appliqué à l'organe rotatif, en mode de récupération d'énergie. Le dispositif doit dans ce but comporter des moyens de réglage de la pression du fluide d'alimentation du moteur, dans ce mode de fonctionnement. En effet, en faisant varier ce seuil de pression, on modifie le couple de freinage transmis par le moteur, et par suite on fait varier l'intensité du freinage.

Dans ce but, l'équipement de limitation de la pression doit donc comporter des moyens pour faire varier la valeur du second seuil. Par exemple, un limiteur de pression dont la pression de tarage définit le second seuil peut être du type commandable. La pression de tarage de ce limiteur est alors réglée par l'opérateur qui opère la machine sur laquelle le dispositif est monté.

Avantageusement, le même limiteur de pression peut éventuellement être utilisé pour limiter la pression du fluide délivré par la pompe au premier seuil indiqué précédemment.

Un deuxième objectif de l'invention est de proposer un ensemble comprenant un dispositif transmission hydraulique, comprenant un moteur hydraulique, une pompe hydraulique, un accumulateur de fluide apte à emmagasiner et délivrer du fluide sous pression ; le dispositif étant apte à être opéré dans les modes d'entraînement par l'accumulateur, de récupération d'énergie, et d'entraînement par la pompe, présentés précédemment ;
ensemble comprenant en outre un arbre, et une masse montée excentrée sur l'arbre, apte à être entraînée en rotation autour de l'arbre de manière à le faire vibrer, ledit au moins un moteur étant attelé à ladite masse ; ensemble dont le dispositif de transmission hydraulique soit apte à entraîner en rotation ou à freiner rapidement la masse, et par ailleurs soit de structure simple et présente un rendement énergétique relativement élevé.

Cet objectif est atteint grâce au fait que le dispositif est du type présenté précédemment.

Dans le mode de récupération d'énergie, qui est une phase de freinage de l'organe rotatif entraîné par le moteur, le fluide refoulé par le moteur (alimenté par la pompe) est dirigé vers l'accumulateur. La pompe assure le gavage du moteur de manière à empêcher toute cavitation.

Pendant cette phase de freinage, le moteur fonctionne en tant que pompe ; le fluide pompé permet de remplir, au moins partiellement, l'accumulateur. Ce mode de récupération d'énergie permet de ralentir efficacement l'organe rotatif entraîné par le moteur (il peut s'agir de plusieurs organes rotatifs, entraînés par le moteur ou par les différents moteurs), du fait de la montée en pression se produisant dans l'accumulateur.

Deux modes d'entraînement permettent l'entraînement du moteur. En général, dans ces modes d'entraînement, le fluide s'échappant du moteur est dirigé vers le réservoir sans surpression, éventuellement via un clapet taré ; le dispositif selon l'invention fonctionne ainsi en circuit ouvert.

En mode d'entraînement par la pompe, la pompe fonctionnant en circuit ouvert assure l'actionnement du moteur. En général dans les modes d'entraînement par la pompe, le fluide n'est pas refoulé vers l'accumulateur mais est redirigé vers le réservoir.

En mode d'entraînement par l'accumulateur, appelé également mode restitution d'énergie, la pression du fluide délivré par l'accumulateur actionne le moteur.

Le mode d'entraînement par l'accumulateur sert à mettre l'organe rotatif attelé au moteur en rotation, notamment à partir d'une situation dans laquelle celui-ci est arrêté. Pour entraîner l'organe rotatif, dans ce mode de fonctionnement du dispositif selon l'invention, le moteur est alimenté par l'accumulateur. Avantageusement, le débit instantané de l'accumulateur peut être très élevé, notamment en comparaison avec une pompe hydraulique : Aussi, la durée nécessaire pour entraîner en rotation l'organe rotatif est plus faible que si celui-ci était entraîné par une pompe.

Pour entraîner l'organe rotatif, de préférence on utilise au départ d'abord le fluide contenu par l'accumulateur ; on déclenche la pompe plus tard, pour continuer à entraîner le moteur lorsque l'accumulateur est vide. Cependant, on peut choisir que le dispositif soit apte à être opéré dans un mode d'entraînement par la pompe spécifique dit 'mode d'entraînement par la pompe et l'accumulateur', dans lequel l'accumulateur alimente ledit au moins un moteur en complément de l'alimentation assurée par la pompe.

Lorsque le dispositif est dans ce mode d'entraînement par la pompe et l'accumulateur, en général un orifice de refoulement de la pompe et un orifice de l'accumulateur sont reliés à un orifice d'alimentation du moteur ; et un orifice d'échappement du moteur est relié à un réservoir sans surpression. Dans ce cas, le moteur est relié simultanément à l'accumulateur et à la pompe de telle sorte qu'il est alimenté en fluide par la source de fluide parmi l'accumulateur et la pompe dont la pression est la plus élevée.

Ce mode de fonctionnement, utilisant le fluide provenant de l'accumulateur, n'est que temporaire. En régime permanent, le dispositif fonctionne normalement dans un mode d'entraînement par la pompe, dit mode d'entraînement par la pompe seule, dans lequel le moteur est alimenté seulement par la pompe, et ne reçoit pas de fluide de l'accumulateur.

Dans ce but, de préférence le dispositif est agencé de telle sorte que, en mode d'entraînement par la pompe :
- un orifice de refoulement de la pompe est relié à un orifice d'alimentation dudit au moins un moteur ; et par ailleurs
- un orifice d'échappement dudit au moins un moteur est relié à un réservoir sans surpression. Ainsi dans ce mode d'entraînement, les circuits respectivement suivis par le fluide d'alimentation et d'échappement du moteur sont distincts.

Quelle que soit l'origine du fluide d'alimentation du moteur, pour minimiser la consommation d'énergie causée par l'entraînement de l'organe rotatif, il est préférable de recourir chaque fois que possible au mode d'entraînement par l'accumulateur. Dans ce but, le dispositif peut comporter en outre une unité de commande, agencée pour, lorsque ledit au moins un moteur doit être entraîné en rotation, si la pression dans l'accumulateur est supérieure à un seuil prédéterminé, placer le dispositif en mode d'entraînement par l'accumulateur. De la sorte, c'est l'énergie stockée dans l'accumulateur qui est dès cet instant utilisée, prioritairement à toute autre (ou au plus simultanément), pour entraîner le moteur. L'unité de commande peut être électronique ou électromécanique.

Les différents modes de fonctionnement indiqués précédemment peuvent être mis en oeuvre en particulier grâce à un agencement adéquat des conduits et valves reliant notamment la pompe, les moteurs et l'accumulateur.

Le dispositif peut notamment comporter une valve de charge d'accumulateur, formée avec une première voie amont reliée à un orifice d'échappement dudit moteur et une première voie aval reliée à l'accumulateur, et présentant une première et une deuxième positions, dans lesquelles elle permet respectivement de relier l'orifice d'échappement du moteur à l'accumulateur, et d'isoler l'orifice d'échappement du moteur de l'accumulateur. La liaison entre la première voie aval et l'accumulateur peut notamment présenter un clapet anti-retour autorisant le passage de fluide seulement vers l'accumulateur.

Dans la définition précédente et les suivantes, les termes 'voie amont' et 'voie aval' font seulement référence à un sens possible de fluide dans la valve, qui est en général mais pas nécessairement le sens préférentiel.

De plus les expressions 'reliée à un orifice d'échappement' ou 'reliée à l'accumulateur' indiquent qu'une relation ou une liaison fluidique est établie dans le mode de fonctionnement approprié du dispositif, mais pas nécessairement de manière permanente. Cette même convention est reprise dans ce qui suit.

La première position de la valve de charge permet de diriger le fluide s'échappant du moteur vers l'accumulateur, et ainsi de charger l'accumulateur en mode de récupération d'énergie.

La valve de charge peut notamment être une valve à quatre voies, présentant en outre une deuxième voie amont reliée à un orifice d'alimentation du moteur, et une deuxième voie aval que le dispositif permet de relier à un orifice de refoulement de la pompe ou à un réservoir sans surpression ; dans la première position de la valve de charge, la première voie amont est reliée à la première voie aval et la seconde voie amont est reliée à la seconde voie aval ; et dans la deuxième position de la valve de charge, la première voie amont est reliée à la deuxième voie aval et la deuxième voie amont est reliée à la première voie aval. Grâce à cet agencement, la valve de charge est apte à diriger le fluide d'échappement du moteur soit vers l'accumulateur (pour le mode de récupération d'énergie), soit vers le réservoir (lorsque l'accumulateur est plein) ; elle peut aussi permettre de diriger le fluide refoulé par la pompe vers l'alimentation du moteur tout en redirigeant le fluide s'échappant du moteur vers l'accumulateur. Cette dernière possibilité est exploitée lorsque le dispositif est en mode de récupération d'énergie.

Le mode d'entraînement par l'accumulateur peut être réalisé en utilisant notamment une valve dédiée : Le dispositif peut ainsi comporter une valve de décharge d'accumulateur, formée avec une voie amont que le dispositif permet de relier à l'accumulateur et une voie aval que le dispositif permet de relier à un orifice d'alimentation du moteur, et présentant une première et une deuxième positions, dans lesquelles elle permet respectivement d'isoler ou de relier ses deux voies. Par sécurité, un clapet anti-retour peut être prévu entre la valve de décharge et le conduit d'alimentation du moteur, clapet n'autorisant le passage de fluide que vers le moteur. Un tel clapet vise à empêcher tout passage de fluide de la pompe vers l'accumulateur, dans le cas où la pompe serait en parallèle avec l'accumulateur reliée à l'orifice d'alimentation du moteur pour alimenter celui-ci en fluide.

Lorsque l'accumulateur est ou devient vide, l'entraînement du moteur doit en général être assuré par la pompe. Dans ce but, il est préférable en général que le dispositif puisse être opéré dans un mode avec entraînement par la pompe, mode dans lequel le fluide alimentant le moteur est délivré uniquement par la pompe, ou encore simultanément par la pompe et par l'accumulateur.

Le fonctionnement du dispositif, avec notamment le mode de récupération d'énergie et le mode d'entraînement par la pompe (en complément ou non de l'accumulateur), peut être réalisé notamment en prévoyant dans le dispositif une valve de pompe à quatre voies, présentant :
- une première voie amont reliée à un orifice de refoulement de la pompe ;
- une deuxième voie amont reliée à un réservoir sans surpression ;
- une première voie aval que le dispositif permet de relier à un orifice d'alimentation du moteur ;
- une deuxième voie aval que le dispositif permet de relier à un orifice d'échappement du moteur ;
- une première position dans laquelle la première voie amont est reliée à la première voie aval, et la deuxième voie amont est reliée à la deuxième voie aval ;
- une deuxième position, dans laquelle la première voie amont est reliée à la deuxième voie amont, et la première et la deuxième voies aval sont isolées.

Dans un mode de réalisation, la première position peut être une position d'alimentation, utilisable en mode avec d'entraînement par l'accumulateur et/ou en mode d'entraînement par la pompe, et la deuxième position peut être une position d'isolement, utilisable pour isoler la pompe du moteur.

Dans un mode de réalisation, la valve de pompe peut être agencée de manière à présenter en outre une troisième position, dans laquelle la première voie amont est reliée à la deuxième voie aval, et la deuxième voie amont est reliée à la première voie aval.

Cette troisième position peut notamment être utilisée pour diriger le fluide provenant de la pompe vers un conduit dans lequel la pression est limitée par un limiteur de pression relié à un réservoir sans surpression, et notamment le conduit reliant la deuxième voie aval de la valve de charge au réservoir sans surpression.

Dans ce dernier cas, la deuxième voie aval de la valve de pompe est reliée à la deuxième voie aval de la valve de charge ; le dispositif peut alors de préférence comporter en outre une unité de commande, agencée pour, en mode de récupération d'énergie, placer la valve de pompe en troisième position, et la valve de décharge en première position.

Comme cela a été indiqué précédemment, le dispositif selon l'invention peut comporter plusieurs moteurs. Ceux-ci peuvent être impliqués de différentes manières.

Dans un mode de réalisation, le dispositif comporte au moins deux moteurs, ainsi que des moyens de circuit aptes à faire transiter ou non le fluide par lesdits au moins deux moteurs, de telle sorte que, dans une configuration du dispositif, en mode d'entraînement par l'accumulateur, le fluide sous pression entraîne en rotation au moins un deuxième moteur en plus du premier moteur ; et en mode de récupération d'énergie, le premier et le deuxième moteur sont alimentés et le fluide s'échappant du premier et du deuxième moteur est injecté dans l'accumulateur.

Les moyens de circuit peuvent comprendre notamment des circuits, des valves et une unité de commande éventuellement.

Les moyens de circuit peuvent par exemple comprendre des valves permettant d'interposer le premier et/ou le deuxième moteur sur une conduite de série indépendamment l'un de l'autre. Ainsi, le dispositif peut être placé dans différentes configurations, selon que le premier moteur, ou le deuxième moteur, ou les deux moteurs, sont interposés sur la conduite de série. Lorsqu'un seul moteur est interposé sur la conduite de série, il peut être considéré comme 'le moteur' cité précédemment. Lorsque deux moteurs ou plus (appelés ci-après 'les moteurs interposés') sont interposés sur la conduite de série, le dispositif fonctionne de la manière suivante :
- en mode d'entraînement par l'accumulateur (c), le fluide sous pression qui transite dans ladite conduite de série entraîne en rotation l'ensemble des moteurs interposés ; et
- en mode de récupération d'énergie, le fluide sous pression qui passe dans ladite conduite de série transite à travers l'ensemble des moteurs interposés pour être ensuite injecté dans l'accumulateur, les différents moteurs interposés fonctionnant alors en tant que pompe.

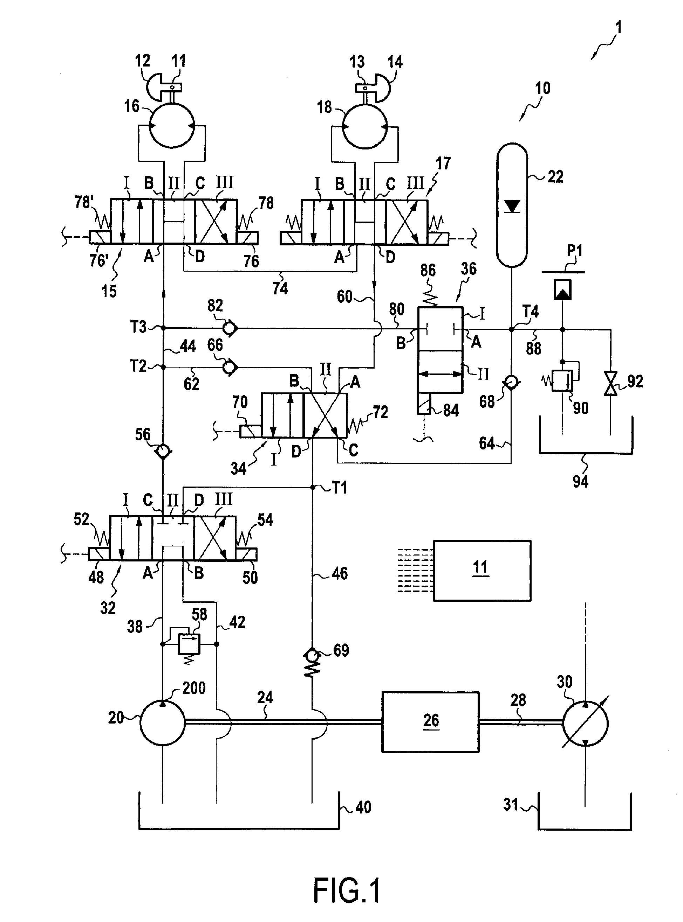

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels les figures 1, 2 et 3 représentent trois modes de réalisation de l'invention.

Un dispositif 10 de transmission hydraulique selon l'invention dans un premier mode de réalisation va maintenant être décrit en relation avec la figure 1.

Le dispositif 10 est un dispositif servant à l'entraînement de deux masses excentrées 12 et 14. Ces masses excentrées ou 'masses vibrantes' sont fixées à l'intérieur de deux billes disposées respectivement à l'avant et à l'arrière d'un compacteur de route non représenté. Elles sont fixées de manière excentrée respectivement sur les arbres 11 et 13 des deux billes, afin d'avoir pouvoir faire vibrer les billes lorsqu'elles sont mises en rotation autour des arbres 11 et 13.

Le dispositif 10, associé aux arbres 11 et 13 et aux masses 11 et 13, forme un ensemble 1 selon l'invention.

Le dispositif 10 comporte :
- deux moteurs hydrauliques à pistons radiaux 16 et 18 ;
- une pompe hydraulique 20 ;
- un accumulateur 22 de fluide, apte à emmagasiner et délivrer du fluide sous pression ; et
- une unité de commande 11, qui actionne les différentes valves du dispositif 10.

Pour ne pas surcharger les figures, les liaisons de transmission d'information des différentes valves du circuit et du capteur de pression P1 (qui seront présentés plus loin) avec l'unité de commande 11 ne sont pas représentées sur les figures.

La pompe 20 est entraînée par un premier arbre de sortie 24 du moteur thermique 26 (un moteur diesel) du compacteur. La pompe 20 est entraînée en permanence par le moteur 24 lorsqu'il fonctionne.

Le moteur 26 entraîne par ailleurs, par un deuxième arbre de sortie 28, une pompe 30 à cylindrée variable. Cette pompe 30 sert à l'entraînement des billes, alors que la pompe 20 sert à l'entraînement des masses 12 et 14 contenues dans les billes. La pompe 30 pompe du fluide à partir d'un réservoir sans surpression 31.

Le dispositif 10 comporte en outre :
- une valve de pompe 32,
- une valve de charge d'accumulateur 34,
- une valve de décharge d'accumulateur 36,
- deux valves de moteurs 15 et 17, associées respectivement aux moteurs 16 et 18.

La valve de pompe 32 est une valve à quatre voies et trois positions. Elle présente :
- une première voie amont A qui est reliée à un orifice de refoulement 200 de la pompe 20 par un conduit 38 ;
- une deuxième voie amont B qui est reliée à un réservoir 40 sans surpression par un conduit 42 (le réservoir 40 peut être le même que le réservoir 31) ;
- une première voie aval C qui est reliée à une première voie A de la valve 15 par un conduit 44 ;
- une deuxième voie aval D qui est reliée à un conduit 46 (décrit plus loin) en un point de jonction T1.

La valve 32 présente une première position I dans laquelle la première voie amont A est reliée à la première voie aval C, et la deuxième voie amont B est reliée à la deuxième voie aval D ; une deuxième position II, dans laquelle la première voie amont A est reliée à la deuxième voie amont B, et la première et la deuxième voies aval C et D sont isolées ; et une troisième position III, dans laquelle la première voie amont A est reliée à la deuxième voie aval D, et la deuxième voie amont B est reliée à la première voie aval C.

La valve 32 est une électrovalve, dont le tiroir peut être commandé dans les première et troisième positions par deux solénoïdes 48, 50 et est rappelé en deuxième position par deux ressorts de rappel 52, 54 antagonistes.

Un clapet anti-retour 56 est interposé sur le conduit 44 et ne permet le passage de fluide que vers la valve 15.

Un limiteur de pression 58 est disposé entre le conduit 38 et le conduit 42, afin d'empêcher une montée en pression excessive dans le conduit 38.

Ce limiteur 58 est taré à une valeur relativement haute dite premier seuil de tarage. Ce premier seuil de pression de tarage est la pression maximale que peuvent supporter les différents composants hydrauliques susceptibles d'être exposés à cette pression, à savoir la pompe 20 et les moteurs 16 et 18.

Le choix d'un premier seuil de tarage élevé permet que la pompe 20 fournisse du fluide sous cette pression élevée aux moteurs 16 et 18, ce qui permet de leur transmettre une puissance relativement importante.

La valve de charge d'accumulateur 34 est une valve à quatre voies et deux positions. Elle présente :
- une première voie amont A qui est reliée à une voie D, dite quatrième voie, de la valve 17, par un conduit 60 ;
- une deuxième voie amont B qui est reliée au conduit 44 en un point de jonction T2 par un conduit 62 ;
- une première voie aval C qui est reliée à l'accumulateur par un conduit 64 ;
- une deuxième voie aval D qui est reliée par le conduit 46 cité précédemment au réservoir 40.

Un clapet anti-retour 66 est interposé sur le conduit 62 et ne permet le passage de fluide que vers le conduit 44.

Le point de jonction T2 entre le conduit 62 et le conduit 44 est situé entre la voie A de la valve 15 et le clapet 56.

Un clapet anti-retour 68 est interposé sur le conduit 64 et ne permet le passage de fluide que vers l'accumulateur 22.

Un clapet taré anti-retour 69 est interposé sur le conduit 46 et ne permet le passage de fluide que vers le réservoir 40. Le tarage du clapet 69 est fixé à un seuil (second seuil de tarage) qui vaut de 3 à 5 Bars.

La valve de charge 34 présente deux positions. En première position I, la première voie amont A est reliée à la première voie aval C et la seconde voie amont B est reliée à la seconde voie aval D ; et dans la deuxième position, la première voie amont A est reliée à la deuxième voie aval D et la deuxième voie amont B est reliée à la première voie aval C. La valve 34 est une électrovalve pilotée par un solénoïde 70. Elle est rappelée par défaut dans sa deuxième position II par des moyens de rappel 72.

Les valves 15 et 17 sont des valves identiques. Aussi, seule la valve 15 sera décrite en détail.

La valve 15 est une valve à quatre voies et trois positions. Elle présente :
- une première voie A, qui est reliée comme cela a été indiqué à la voie C de la valve 32 par le conduit 44 ;
- une deuxième voie B qui est reliée à un orifice d'alimentation du moteur 16 ;
- une troisième voie C qui est reliée à un orifice d'échappement du moteur 16 ;
- une quatrième voie D qui est reliée à la première voie A de la valve 17, par un conduit 74.

La valve de moteur 15 présente trois positions. En première position I, la première voie A est reliée à la deuxième voie B, et la troisième voie C est reliée à la quatrième voie D : la valve 15 permet de faire transiter le fluide dans le moteur 16 entre l'extrémité du conduit 44 (du côté de la valve 15) et le conduit 74, dans un premier sens d'alimentation du moteur 16. En deuxième position II, les quatre voies de la valve 15 sont reliées : la valve 15 réalise alors un bipasse du moteur 16. En troisième position III (qui est optionnelle), la première voie A est reliée à la troisième voie C, et la deuxième voie B est reliée à la quatrième voie D : la valve 15 interpose alors le moteur 16 entre l'extrémité du conduit 44 (du côté de la valve 15) et le conduit 74, dans un second sens d'alimentation inverse au premier. La valve 15 est une électrovalve pilotée par deux solénoïdes 76 et 76'. Elle comporte des moyens de rappel 78 et 78' qui la placent par défaut en deuxième position II (position de bipasse du moteur 16).

En ce qui concerne la valve 17, ses deuxième et troisième voies B et C sont reliées respectivement aux orifices d'alimentation et d'échappement du moteur 18. Sa voie A est reliée au conduit 74. Sa voie D est reliée, comme indiqué plus haut, à la voie A de la valve de décharge 34.

On comprend donc que les valves 15 et 17 permettent d'interposer librement, entre l'extrémité précitée du conduit 44, et le conduit 60, l'un quelconque des moteurs 16 et 18, ou encore les deux moteurs, en série. Le conduit 74 correspond donc au 'conduit de série' présenté précédemment.

La valve de décharge d'accumulateur 36 est une valve à deux voies et deux positions. Elle présente :
- une voie amont A reliée au conduit 64 en un point de jonction T4 ;
- une voie aval B reliée au conduit 44 en un point de jonction T3, par un conduit 80.

En première position I, la valve 36 isole les voies A et B ; inversement elle les relie en deuxième position II.
Le point de jonction T3 est situé entre le point de jonction T2 et la voie A de la valve 15.
Un clapet anti-retour 82 est interposé sur le conduit 80 et ne permet le passage de fluide que vers le conduit 44.
Le point de jonction T4 est situé entre l'accumulateur 22 et le clapet anti-retour 68.
La valve 36 est une électrovalve pilotée par un solénoïde 84. Elle comporte des moyens de rappel 86 qui la placent par défaut en première position.
Un capteur de pression P1 est relié au conduit 64 au point de jonction T4, via un conduit 88. Il fournit l'information de pression dans l'accumulateur 22 à l'unité de commande 11.

Enfin un limiteur de pression 90 et une valve de vidange manuelle 92 sont reliés au conduit 88 : Le limiteur de pression 90 permet d'évacuer du fluide de l'accumulateur 22 (via les conduits 64 et 88) vers un réservoir 94, si la pression devient excessive dans l'accumulateur 22. La valve 92 permet de vidanger l'accumulateur en cas de besoin.

Le fonctionnement du système 10 va maintenant être décrit. Ce fonctionnement est piloté par l'unité de commande électronique 11. En effet, les différentes électrovalves 15, 17, 32, 34, 36 du dispositif 10, sont commandées par l'unité de commande 11, et le capteur de pression P1 est relié à l'unité de commande 11.

L'unité de commande peut placer le système dans l'un quelconque des modes de fonctionnement suivants :
- un mode d'isolement, dans lequel les moteurs ne sont pas entraînés, et le fluide délivré par la pompe 20 est dirigé vers le réservoir 40 ;
- trois modes d'entraînement, dans lequel les moteurs sont entraînés :
   ∘ un premier mode d'entraînement par l'accumulateur, dans lequel seul l'accumulateur fournit le fluide d'alimentation des moteurs ;
   ∘ un deuxième mode d'entraînement, par l'accumulateur et la pompe, dans lequel l'accumulateur et la pompe fournissent le fluide d'alimentation des moteurs ;
   ∘ un mode d'entraînement par la pompe, dans lequel seule la pompe fournit le fluide d'alimentation des moteurs ;
- un mode de récupération d'énergie, dans lequel les moteurs sont freinés, le fluide pompé par les moteurs est dirigé vers l'accumulateur.

Dans les différents modes présentés ci-dessus, bien qu'il soit fait référence 'aux moteurs', ces modes peuvent également être mis en oeuvre lorsqu'un seul moteur est utilisé, grâce aux valves 15 et 17 qui permettent librement de relier l'un et/ou l'autre des moteurs 16 et 18 au conduit 74.

Les positions de valves correspondant aux différents modes de fonctionnement du dispositif 10 sont les suivantes :

| Mode de fonctionnement \ Valves | 32 | 34 | 36 |
|---|---|---|---|
| Isolement | II | Indifférent | I |
| Premier mode d'entraînement par l'accumulateur | II | II | II |
| (accumulateur seul) | | | |
| Deuxième mode d'entraînement par l'accumulateur | I | II | II |
| (accumulateur et pompe) | | | |
| Mode d'entraînement par la pompe | I | II | I |
| (pompe seule) | | | |
| Récupération d'énergie | III | I | I |

Par ailleurs, dans les modes d'accélération par l'accumulateur ou de récupération d'énergie, il est possible de faire transiter le fluide par l'un et/ou l'autre des moteurs 16 et 18, conformément à la table de commande suivante :

| Type d'alimentation des moteurs \ Valves | 15 | 17 |
|---|---|---|
| Pas d'alimentation | II | II |
| Alimentation moteur 16 | I | II |
| Alimentation moteur 18 | II | I |
| Alimentation moteurs 16 et 18 | I | I |
| Alimentation en sens inverse moteur 16 | III | II |
| Alimentation en sens inverse moteur 18 | II | III |
| Alimentation en sens inverse moteurs 16 et 18 | III | III |

Le fonctionnement du dispositif 10 est le suivant :

Lorsque les masses sont au repos, la valve de pompe est placée en position II. Le fluide refoulé par la pompe est alors dirigé vers le réservoir 40. Par ailleurs, la valve 36 de décharge d'accumulateur est placée en position I de manière à isoler l'accumulateur 22.

Pour lancer les masses 12 et 14 en rotation, alors qu'elles sont arrêtées, le mode d'entraînement par l'accumulateur est utilisé en priorité. Si la pression de l'accumulateur est suffisante, le dispositif est d'abord placé dans le premier mode d'entraînement par l'accumulateur, dans lequel seul l'accumulateur 22 fournit le fluide alimentant les moteurs. La valve de décharge d'accumulateur 36 est ouverte (position II), si bien que le fluide sous pression contenu dans l'accumulateur transite par les moteurs 16 et 18. Les moteurs sont ainsi actionnés, et entraînent en rotation les masses 12 et 14.

Si la pression dans l'accumulateur, sans être nulle (ie, à la pression atmosphérique), est cependant insuffisante pour entraîner efficacement les moteurs, on peut opter pour le deuxième mode d'entraînement par l'accumulateur, c'est-à-dire avec la pompe. Le fluide refoulé par la pompe 20 s'ajoute alors au fluide sortant de l'accumulateur 20 pour alimenter les moteurs, ce qui permet de maintenir une pression d'alimentation des moteurs plus élevée pendant une durée plus longue que si seul l'accumulateur alimentait les moteurs (premier mode d'entraînement par l'accumulateur).

Les modes d'accélération par l'accumulateur cependant ne peuvent être utilisés que si la pression dans l'accumulateur 22 est supérieure à une valeur donnée prédéterminée, représentant habituellement un état vide ou presque vide de l'accumulateur. Lorsque la pression dans l'accumulateur chute en deçà de cette valeur, il est nécessaire, pour entraîner les masses 12 et 14, d'utiliser la pompe. Le dispositif est alors placé en mode d'entraînement par la pompe. Dans ce mode de fonctionnement, la valve de pompe 32 est placée en première position I. Le fluide refoulé par la pompe est dirigé directement vers les moteurs 16 et 18 via le conduit 44. Comme la valve de charge 34 est en position II, le fluide s'échappant du moteur 18 est dirigé par le conduit 46 vers le réservoir 40. L'accumulateur 22, dans ce mode de fonctionnement, reste isolé.

Inversement, pour freiner les masses 12 et 14, le dispositif est placé en mode de récupération d'énergie. Pour cela, l'unité de commande 11 fait passer la valve de charge d'accumulateur 34 en position I, alors que la valve de décharge 36 reste fermée (en position I), et que la valve de pompe 32 passe en position III. Dans cette configuration, le fluide refoulé par la pompe 20 sort de la valve 32 par la voie D et rejoint le conduit 46 au point T1 ; il est ainsi dirigé soit vers la valve 34, soit vers le réservoir 40. Du fait du clapet taré 69 sur le conduit 46, la pression dans le conduit 46 n'excède pas le second seuil de pression, égal à la pression de tarage du clapet 69, à savoir quelques Bars.

Par suite, la pression dans le conduit 46 se maintient à la pression de tarage du clapet 69, notamment du fait de l'apport permanent de fluide par la pompe 20. Cette situation permet donc avantageusement d'alimenter 'à la demande' des moteurs 16 et 18, en fluide sous faible pression. Les moteurs 16 et 18 peuvent ainsi être alimentés de manière continue, à la plus faible pression possible qui évite tout risque de cavitation. Le couple de freinage des moteurs 16 et 18 est ainsi maximisé sans risque pour les moteurs.

La pression de tarage du clapet 69 est naturellement bien plus faible que celle du limiteur de pression 58. En effet, alors que la pression de tarage du clapet 69 est choisie à la valeur minimale possible pour éviter toute cavitation, afin de maximiser les différences de pression entre les orifices des moteurs 16 et 18 (pour permettre un freinage maximal), au contraire la pression de tarage du limiteur 58 est prévue assez élevée, comme indiqué précédemment, pour permettre un apport de puissance élevé de la pompe 20 aux moteurs 16 et 18, sous forme de pression hydraulique. Grâce à ces dispositions avantageusement, une pompe unique (pompe 20) permet d'une part d'entraîner le ou les moteurs (16,18) à une pression relativement élevée seulement limitée par le premier seuil de pression ; et d'autre part d'alimenter le ou les moteurs à une pression bien moindre en mode de récupération d'énergie, fixée par le second seuil de pression, le premier seuil étant relativement élevé par rapport au second.

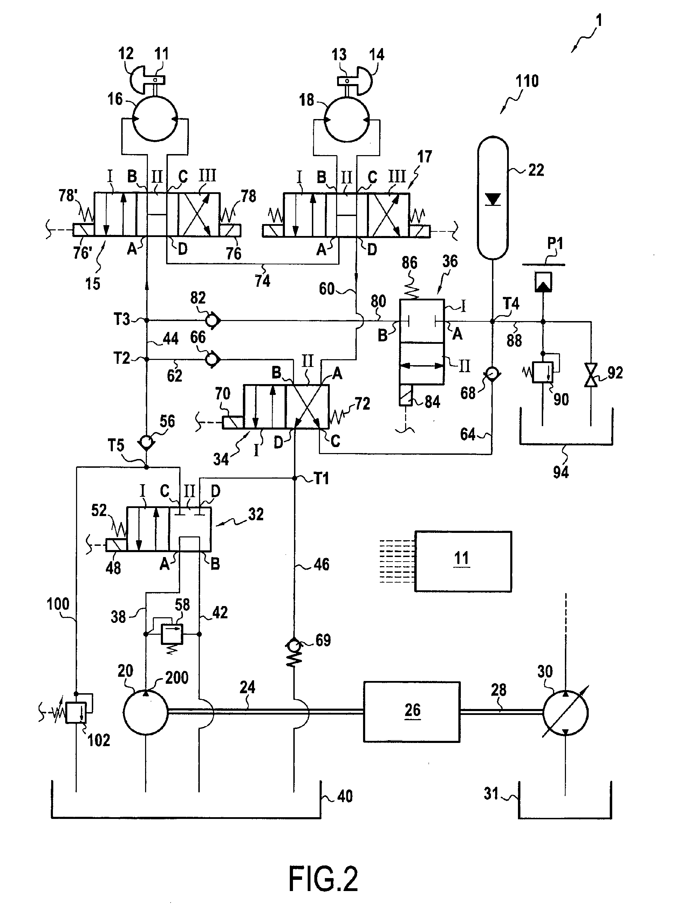

La figure 2 représente un dispositif 110 selon l'invention, qui est une variante du dispositif 10.

Dans le dispositif 110, la valve 32 est modifiée et ne présente que ses première et deuxième positions (I et II).

Un conduit 100 de retour de fluide est ajouté pour relier la voie C de la valve 32 au réservoir 40. Ce conduit relie le conduit 44, en un point de jonction T5 situé entre la voie C de la valve 32 et le clapet 56, au réservoir 40. Sur le conduit 100 est disposé un limiteur de pression commandé 102, dont la pression peut être commandée par l'unité de commande 11.

Les positions des valves de charge, décharge d'accumulateur et de pompe, les positions du clapet 102, correspondant aux différents modes de fonctionnement du dispositif 110, sont les suivantes :

| Mode de fonctionnement\Valves-limiteur | 32 | 34 | 36 | 102 |
|---|---|---|---|---|
| Isolement | II | Indifférent | I | Fermé |
| Premier mode d'entraînement par l'accumulateur (accumulateur seul) | II | II | II | Fermé |
| Deuxième mode d'entraînement par l'accumulateur (accumulateur et pompe) | I | II | II | Fermé |
| Accélération par la pompe (pompe seule) | I | II | I | Fermé |
| Récupération d'énerqie | I | I | I | Réqulation |

Le fonctionnement du dispositif 110 en mode d'isolement, et dans les différents modes d'entraînement, est sensiblement le même que celui du dispositif 10 dans les mêmes modes. Dans ces modes en effet, la valve de pompe n'est pas placée en sa troisième position. Dans ces modes, le limiteur 102 reste fermé ; par conséquent, aucun fluide ne circule dans le conduit 100.

En revanche, le fonctionnement en mode de récupération d'énergie est différent. La valve de pompe est placée en position I, ce qui permet de diriger le fluide refoulé directement dans le conduit 44, sans passage via la valve 34 comme dans le dispositif 10. La pression dans le conduit 44 est limitée par le limiteur de pression 102. La pression de tarage du limiteur 102 est commandée par l'unité de commande 11, elle-même étant pilotée par l'opérateur du compacteur. La pression d'alimentation des moteurs 16 et 18 s'établit à la pression de tarage du limiteur 102. En fonction de la valeur qui lui est donnée, la pression d'alimentation des moteurs 16 et 18 est plus ou moins élevée. Comme le couple de freinage est directement lié à l'écart de pression entre les pression d'alimentation et d'échappement des moteurs 16 et 18, en faisant varier la pression d'alimentation des moteurs 16 et 18, on agit donc directement sur l'intensité du couple de freinage des moteurs 16 et 18. Le pilotage de la pression de tarage du limiteur 102 permet donc avantageusement de piloter l'Intensité du couple de freinage des moteurs 16 et 18.

On notera que dans le dispositif 10, le clapet taré 69 peut être remplacé par un limiteur de débit à pression de tarage commandable identique au limiteur 102, afin d'obtenir la même possibilité que dans le dispositif 110, à savoir la possibilité de piloter l'intensité du freinage, en mode de récupération d'énergie.

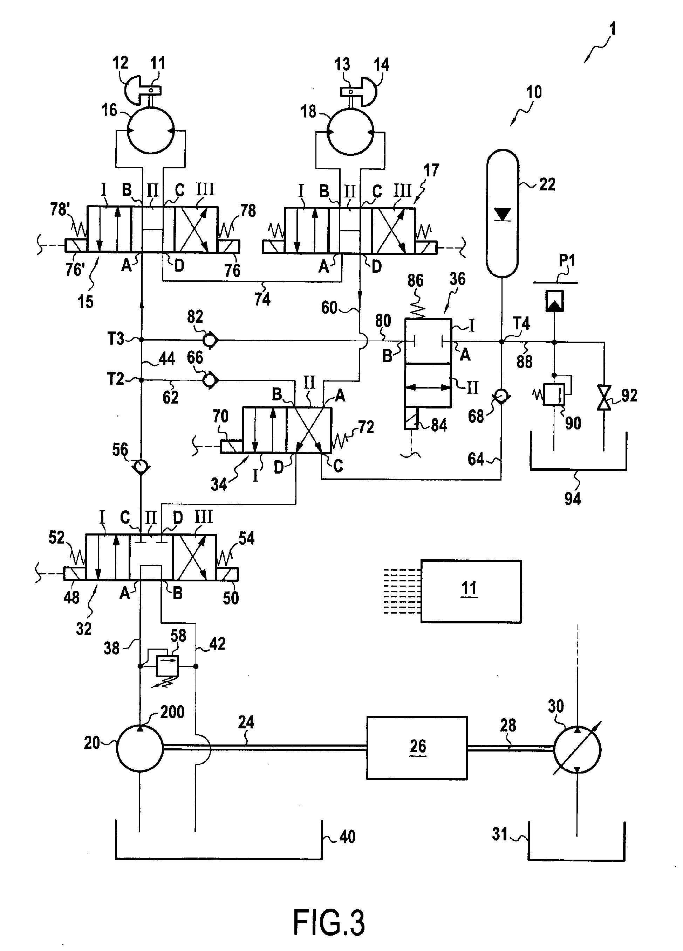

La figure 3 présente avec un dispositif de transmission hydraulique 210 un troisième mode de réalisation de l'invention.

Celui-ci ne diffère du dispositif 10 que par les points suivants :
- le tronçon du conduit 46 situé en aval de l'embranchement T1, ainsi que le clapet taré 69 sont supprimés ; et
- le limiteur de pression 58 est à tarage variable et non à tarage fixe comme précédemment.

Grâce à ces dispositions, les mêmes modes de fonctionnement que le dispositif 10 peuvent être réalisés.

Plus précisément :
- en mode de récupération d'énergie (position III) de la valve 32, la limitation de la pression à une valeur faible, est limitée en deça d'une valeur dite second seuil, en imposant au limiteur 58, dans ce mode de fonctionnement, la valeur désirée pour le second seuil ; et
- dans les modes d'entraînement par la pompe ou avec accumulateur et pompe, la pression dans la conduite de refoulement de la pompe et d'alimentation des moteurs (conduites 38 et 44) peut être limitée à une valeur adaptée en étant limitée seulement à un premier seuil ayant une valeur relativement élevée, en imposant dans ces modes de fonctionnement cette valeur de premier seuil comme pression de tarage du limiteur 58.

## Revendications

1. Dispositif (10,110) de transmission hydraulique, comprenant :
au moins un moteur hydraulique (16,18) ;
une pompe hydraulique (20) ;
un accumulateur de fluide (22), apte à emmagasiner et délivrer du fluide sous pression ;
le dispositif étant apte à être opéré :
- dans un mode d'entraînement par l'accumulateur, dans lequel le fluide sous pression délivré par l'accumulateur est utilisé pour entraîner en rotation le moteur ;
- dans un mode de récupération d'énergie, dans lequel le moteur agissant en tant que pompe refoule du fluide dans l'accumulateur ;
- dans un mode d'entraînement par la pompe, dans lequel le moteur est entraîné par du fluide refoulé par la pompe ;
le dispositif **se caractérisant en ce que** :
- dans le mode d'entraînement par la pompe, la pompe alimente le moteur avec du fluide prélevé dans un réservoir sans surpression ; et
- dans le mode de récupération d'énergie, le moteur est alimenté par la pompe prélevant du fluide dans ledit réservoir.

2. Dispositif selon la revendication 1, dans lequel, dans un mode d'entraînement par la pompe, dit mode d'entraînement par la pompe seule, le moteur est alimenté seulement par la pompe, et ne reçoit pas de fluide de l'accumulateur.

3. Dispositif selon la revendication 1 ou 2, agencé de telle sorte que, en mode d'entraînement par la pompe :
- un orifice de refoulement de la pompe est relié à un orifice d'alimentation du moteur ; et par ailleurs
- un orifice d'échappement du moteur est relié à un réservoir sans surpression.

4. Dispositif selon l'une quelconque des revendications 1 à 3, le dispositif présentant un mode d'entraînement par la pompe spécifique dit 'mode d'entraînement par la pompe et l'accumulateur', dans lequel l'accumulateur alimente le moteur en complément de l'alimentation assurée par la pompe.

5. Dispositif selon la revendication 4, dans lequel, en mode d'entraînement par la pompe et l'accumulateur :
- un orifice de refoulement de la pompe et un orifice de l'accumulateur sont reliés à un orifice d'alimentation du moteur ; et
- un orifice d'échappement du moteur est relié à un réservoir sans surpression.

6. Dispositif selon l'une quelconque des revendications 1 à 5, comportant en outre un équipement de limitation de la pression qui :
- en mode d'entraînement par la pompe, limite la pression de fluide délivré par la pompe à un premier seuil ; et
- en mode de récupération d'énergie, limite la pression de fluide délivré par la pompe à un second seuil inférieur au premier seuil.

7. Dispositif selon la revendication 6, dans lequel l'équipement de limitation de la pression comporte :
- soit un limiteur de pression à tarage variable, lesdits premier et second seuils correspondant à des tarages différents dudit limiteur,
- soit par deux limiteurs de pression, dont les valeurs de tarage correspondent respectivement auxdits premier et second seuils.

8. Dispositif selon l'une quelconque des revendications 1 à 7, comportant en outre une valve de charge d'accumulateur (34), formée avec une première voie amont (A) reliée à un orifice d'échappement du moteur et une première voie aval (C) reliée à l'accumulateur, et présentant une première (I) et une deuxième (II) positions, dans lesquelles elle permet respectivement de relier l'orifice d'échappement du moteur à l'accumulateur, et d'isoler l'orifice d'échappement du moteur de l'accumulateur.

9. Dispositif selon la revendication 8, dans lequel ladite valve de charge (34) est une valve à quatre voies, présentant en outre une deuxième voie amont (B) qui est reliée à un orifice d'alimentation du moteur, et une deuxième voie aval (D) que le dispositif permet de relier à un orifice de refoulement de la pompe ou à un réservoir sans surpression ; dans la première position de la valve de charge, la première voie amont est reliée à la première voie aval et la seconde voie amont est reliée à la seconde voie aval ; et dans la deuxième position de la valve de charge, la première voie amont est reliée à la deuxième voie aval et la deuxième voie amont est reliée à la première voie aval.

10. Dispositif selon l'une quelconque des revendications 1 à 9, comportant en outre une valve de décharge d'accumulateur (36), formée avec une voie amont (A) que le dispositif permet de relier à l'accumulateur et une voie aval (B) que le dispositif permet de relier à un orifice d'alimentation du moteur, et présentant une première (I) et une deuxième (II) positions, dans lesquelles elle permet respectivement d'isoler ou de relier ses deux voies.

11. Dispositif selon l'une quelconque des revendications 1 à 10, comportant en outre une valve de pompe (32) à quatre voies, présentant:
- une première voie amont (A) reliée à un orifice de refoulement de la pompe ;
- une deuxième voie amont (B) reliée à un réservoir sans surpression ;
- une première voie aval (C) que le dispositif permet de relier à un orifice d'alimentation du moteur ;
- une deuxième voie aval (D) que le dispositif permet de relier à un orifice d'échappement du moteur ;
- une première position (I) dans laquelle la première voie amont est reliée à la première voie aval, et la deuxième voie amont est reliée à la deuxième voie aval ;
- une deuxième position (II), dans laquelle la première voie amont est reliée à la deuxième voie amont, et la première et la deuxième voies aval sont isolées.

12. Dispositif selon la revendication 11, dans lequel la valve de pompe présente en outre une troisième position (III), dans laquelle la première voie amont est reliée à la deuxième voie aval, et la deuxième voie amont est reliée à la première voie aval.

13. Dispositif selon la revendication 10 et l'une quelconque des revendications 11 et 12, dans lequel la deuxième voie aval (D) de la valve de pompe (32) est reliée à la deuxième voie aval (D) de la valve de charge (34) ; le dispositif comportant en outre une unité de commande agencée pour, en mode de récupération d'énergie, placer la valve de pompe en troisième position (III), et la valve de décharge en première position (I).

14. Dispositif selon l'une quelconque des revendications 1 à 13, comportant au moins deux moteurs (16,18), ainsi que des moyens de circuit (62,44,74,60,15,17) aptes à faire transiter ou non le fluide par lesdits au moins deux moteurs, de telle sorte que, dans une configuration du dispositif, en mode d'entraînement par l'accumulateur, le fluide sous pression entraîne en rotation au moins un deuxième moteur en plus d'un premier moteur ; et en mode de récupération d'énergie, lesdits premier et deuxième moteurs sont alimentés et le fluide s'échappant desdits premier et deuxième moteurs est injecté dans l'accumulateur.

15. Dispositif selon l'une quelconque des revendications 1 à 14, comportant en outre une unité de commande (11), agencée pour, lorsque ledit moteur doit être entraîné en rotation, si la pression (P1) dans l'accumulateur est supérieure à un seuil prédéterminé, placer le dispositif en mode d'entraînement par l'accumulateur.

16. Ensemble (1) comprenant un dispositif (10,110) selon l'une quelconque des revendications 1 à 15, un arbre (11,13), et une masse (12,14) montée excentrée sur l'arbre, apte à être entraînée en rotation autour de l'arbre de manière à le faire vibrer, ledit moteur étant attelé à ladite masse.

## Patentansprüche

1. Hydraulische Übertragungsvorrichtung (10, 110), umfassend:
wenigstens einen Hydraulikmotor (16, 18);
eine Hydraulikpumpe (20);
einen Fluidspeicher (22), der geeignet ist, Druckfluid zu speichern und zu liefern;
wobei die Vorrichtung geeignet ist, betrieben zu werden:
- in einem Antriebsmodus durch den Speicher, in dem das durch den Speicher gelieferte Druckfluid verwendet wird, um den Motor drehanzutreiben;
- in einem Energierückgewinnungsmodus, in dem der als Pumpe wirkende Motor Fluid in den Speicher fördert;
- in einem Antriebsmodus durch die Pumpe, in dem der Motor mit durch die Pumpe gefördertem Fluid angetrieben wird;
wobei die Vorrichtung **dadurch gekennzeichnet ist, dass**:
- in dem Antriebsmodus durch die Pumpe, die Pumpe den Motor mit aus einem überdrucklosen Behälter entnommenem Fluid beaufschlagt; und
- in dem Energierückgewinnungsmodus der Motor durch die Pumpe, die Fluid aus dem Behälter entnimmt, versorgt wird.

2. Vorrichtung nach Anspruch 1, wobei in einem Antriebsmodus durch die Pumpe, sogenannten Modus zum Antreiben nur durch die Pumpe, der Motor lediglich durch die Pumpe versorgt wird und kein Fluid aus dem Speicher erhält.

3. Vorrichtung nach Anspruch 1 oder 2, die derart eingerichtet ist, dass im Antriebsmodus durch die Pumpe:
- eine Drucköffnung der Pumpe mit einer Zuführöffnung des Motors verbunden ist; und außerdem
- eine Auslassöffnung des Motors mit einem überdrucklosen Behälter verbunden ist.

4. Vorrichtung nach einem der Ansprüche 1 bis 3, wobei die Vorrichtung einen spezifischen Antriebsmodus durch die Pumpe, sogenannten Modus zum Antreiben durch die Pumpe und den Speicher, aufweist, in dem der Speicher ergänzend zu der durch die Pumpe sichergestellten Versorgung den Motor versorgt.

5. Vorrichtung nach Anspruch 4, wobei im Modus zum Antreiben durch die Pumpe und den Speicher:
- eine Drucköffnung der Pumpe und eine Öffnung des Speichers mit einer Zuführöffnung des Motors verbunden sind; und
- eine Auslassöffnung des Motors mit einem überdrucklosen Behälter verbunden ist.

6. Vorrichtung nach einem der Ansprüche 1 bis 5, ferner umfassend eine Druckbegrenzungseinrichtung, die:
- im Antriebsmodus durch die Pumpe den Druck von durch die Pumpe geliefertem Fluid auf einen ersten Schwellenwert begrenzt; und
- im Energierückgewinnungsmodus den Druck von durch die Pumpe geliefertem Fluid auf einen zweiten Schwellenwert, der unterhalb des ersten Schwellenwertes liegt, begrenzt.

7. Vorrichtung nach Anspruch 6, wobei die Druckbegrenzungseinrichtung umfasst:
- entweder einen Druckbegrenzer mit variabler Einstellung, wobei der erste und der zweite Schwellenwert unterschiedlichen Einstellungen des Begrenzers entsprechen,
- oder zwei Druckbegrenzer, deren Einstellwerte dem ersten bzw. dem zweiten Schwellenwert entsprechen.

8. Vorrichtung nach einem der Ansprüche 1 bis 7, ferner umfassend ein Speicherbelastungsventil (34), das mit einem ersten stromaufwärtigen Weg (A), der mit einer Auslassöffnung des Motors verbunden ist, und einem ersten stromabwärtigen Weg (C), der mit dem Speicher verbunden ist, ausgebildet ist und das eine erste (I) und eine zweite (II) Stellung aufweist, in denen es ermöglicht, die Auslassöffnung des Motors mit dem Speicher zu verbinden bzw. die Auslassöffnung des Motors von dem Speicher zu trennen.

9. Vorrichtung nach Anspruch 8, wobei das Belastungsventil (34) ein Vier-WegeVentil ist, das ferner einen zweiten stromaufwärtigen Weg (B), der mit einer Zuführöffnung des Motors verbunden ist, und einen zweiten stromabwärtigen Weg (D) umfasst, den die Vorrichtung mit einer Drucköffnung der Pumpe oder mit einem überdrucklosen Behälter zu verbinden ermöglicht; in der ersten Stellung des Belastungsventils der erste stromaufwärtige Weg mit dem ersten stromabwärtigen Weg verbunden ist und der zweite stromaufwärtige Weg mit dem zweiten stromabwärtigen Weg verbunden ist; und in der zweiten Stellung des Belastungsventils der erste stromaufwärtige Weg mit dem zweiten stromabwärtigen Weg verbunden ist und der zweite stromaufwärtige Weg mit dem ersten stromabwärtigen Weg verbunden ist.

10. Vorrichtung nach einem der Ansprüche 1 bis 9, ferner umfassend ein Speicherentlastungsventil (36), das mit einem stromaufwärtigen Weg (A), den die Vorrichtung mit dem Speicher zu verbinden ermöglicht, und einem stromabwärtigen Weg (B), den die Vorrichtung mit einer Zuführöffnung des Motors zu verbinden ermöglicht, ausgebildet ist und das eine erste (I) und eine zweite (II) Stellung aufweist, in denen es ermöglicht, seine beiden Wege zu trennen bzw. zu verbinden.

11. Vorrichtung nach einem der Ansprüche 1 bis 10, ferner umfassend ein Vier-Wege-Pumpenventil (32), das aufweist:
- einen ersten stromaufwärtigen Weg (A), der mit einer Drucköffnung der Pumpe verbunden ist;
- einen zweiten stromaufwärtigen Weg (B), der mit einem überdrucklosen Behälter verbunden ist;
- einen ersten stromabwärtigen Weg (C), den die Vorrichtung mit einer Zuführöffnung des Motors zu verbinden ermöglicht;
- einen zweiten stromabwärtigen Weg (D), den die Vorrichtung mit einer Auslassöffnung des Motors zu verbinden ermöglicht;
- eine erste Stellung (I), in der der erste stromaufwärtige Weg mit dem ersten stromabwärtigen Weg verbunden ist und der zweite stromaufwärtige Weg mit dem zweiten stromabwärtigen Weg verbunden ist;
- eine zweite Position (II), in der der erste stromaufwärtige Weg mit dem zweiten stromaufwärtigen Weg verbunden ist und der erste und der zweite stromabwärtige Weg getrennt sind.

12. Vorrichtung nach Anspruch 11, wobei das Pumpenventil ferner eine dritte Position (III) aufweist, in der der erste stromaufwärtige Weg mit dem zweiten stromabwärtigen Weg verbunden ist und der zweite stromaufwärtige Weg mit dem ersten stromabwärtigen Weg verbunden ist.

13. Vorrichtung nach Anspruch 10 und einem der Ansprüche 11 und 12, wobei der zweite stromabwärtige Weg (D) des Pumpenventils (32) mit dem zweiten stromabwärtigen Weg (D) des Belastungsventils (34) verbunden ist; wobei die Vorrichtung ferner eine Steuereinheit umfasst, die dazu eingerichtet ist, im Energierückgewinnungsmodus das Pumpenventil in die dritte Position (III) und das Entlastungsventil in die erste Position (I) zu bringen.

14. Vorrichtung nach einem der Ansprüche 1 bis 13, umfassend wenigstens zwei Motoren (16, 18) sowie Kreislaufmittel (62, 44, 74, 60, 15, 17), die geeignet sind, das Fluid über die wenigstens zwei Motoren laufen zu lassen oder nicht, derart, dass in einer Ausführung der Vorrichtung, im Antriebsmodus durch den Speicher, das Druckfluid wenigstens einen zweiten Motor zusätzlich zu einem ersten Motor drehantreibt und, im Energierückgewinnungsmodus, der erste und der zweite Motor beaufschlagt werden und das aus dem ersten und dem zweiten Motor austretende Fluid in den Speicher eingeleitet wird.

15. Vorrichtung nach einem der Ansprüche 1 bis 14, ferner umfassend eine Steuereinheit (11), die dazu eingerichtet ist, dann, wenn der Motor drehangetrieben werden soll, falls der Druck (P1) in dem Speicher oberhalb eines vorbestimmten Schwellenwertes liegt, die Vorrichtung in den Antriebsmodus durch den Speicher zu bringen.

16. Anordnung (1), umfassend eine Vorrichtung (10, 110) nach einem der Ansprüche 1 bis 15, eine Welle (11, 13) und eine an der Welle außermittig angebrachte Masse (12, 14), die geeignet ist, um die Welle drehangetrieben zu werden, um sie in Schwingungen zu versetzen, wobei der Motor mit der Masse gekuppelt ist.

## Claims

1. An hydraulic transmission device (10,110), comprising:
at least one hydraulic motor (16,18) ;
an hydraulic pump (20);
a fluid accumulator (22), capable of storing and delivering fluid under pressure;
the device being capable of operating:
- in an accumulator-driven mode, wherein the fluid under pressure delivered by the accumulator is used to drive the motor in rotation;
- in an energy-recovery mode, wherein the motor acting as a pump delivers fluid into the accumulator;
- in a pump-driven mode, wherein the motor is driven by fluid delivered by the pump;
the device being **characterized in that**:
- in the pump-driven mode, the pump supplies the motor with fluid drawn from an unpressurized reservoir; and
- in the energy-recovery mode, the motor is supplied by the pump drawing fluid from said reservoir.

2. A device according to Claim 1, wherein, in a pump-driven mode called the pump-only drive mode, the motor is fed only by the pump, and receives no fluid from the accumulator.

3. A device according to Claim 1 or 2, so arranged that, in pump-driven mode:
- a delivery port of the pump is connected to a feed port of the motor; and further
- an exhaust port of the motor is connected to an unpressurized reservoir.

4. A device according to any one of Claims 1 through 3, the device having a specific pump-driven mode called "pump- and accumulator-driven mode," wherein the accumulator feeds the motor, supplementing the feed provided by the pump.

5. A device according to Claim 4, wherein, in the pump- and accumulator-driven mode:
- a delivery port of the pump and a port of the accumulator are connected to a feed port of the motor; and
- an exhaust port of the motor is connected to an unpressurized reservoir.

6. A device according to any one of Claims 1 through 5, additionally including pressure-limiting equipment which:
- in pump-driven mode, limits the pressure of the fluid delivered by the pump to a first threshold; and
- in energy-recovery mode, limits the pressure of fluid delivered by the pump to a second threshold lower than the first threshold.

7. A device according to Claim 6, wherein the pressure-limiting equipment comprises:
- either a pressure limiter with a variable setting, said first and second thresholds corresponding to different settings of said limiter,
- or two pressure limiters, the calibration values whereof correspond respectively to said first and second thresholds.

8. A device according to any one of Claims 1 through 7, also comprising an accumulator charging valve (34), made with a first upstream channel (A) connected to an exhaust port of the motor and a first downstream channel (C) connected to the accumulator, and having a first (I) and a second (II) positions, wherein it provides respectively for connecting the exhaust port of the motor to the accumulator and for isolating the exhaust port of the motor from the accumulator.

9. A device according to claim 8, wherein said charging valve (34) is a four-way valve, having in addition a second upstream channel (B) which is connected to a feed port of the motor, and a second downstream port (D) which the device allows to be connected to a delivery port of the pump or to an unpressurized reservoir; in the first position of the charging valve, the first upstream channel is connected to the first downstream channel and the second upstream channel is connected to the second downstream channel; and in the second position of the charging valve, the first upstream channel is connected to the second downstream channel and the second upstream channel is connected to the first downstream channel.

10. A device according to any one of Claims 1 through 9, also comprising an accumulator discharge valve (36), made with an upstream channel (A), which the device allows to be connected to the accumulator and a downstream channel (B) which the device allows to be connected to a feed port of the motor, and having a first (I) and a second (II) positions, wherein it allows its to channels to be isolated or connected, respectively.

11. A device according to any one of Claims 1 through 10, also comprising a four-way pump valve (32), having:
- a first upstream channel (A) connected to a delivery port of the pump;
- a second upstream channel (B) connected to an unpressurized reservoir;
- a first downstream channel (C) which the device allows to be connected to a feed port of the motor;
- a second downstream channel (D) which the device allows to be connected to an exhaust port of the motor;
- a first position (I) wherein the first upstream channel is connected to the first downstream channel, and the second upstream channel is connected to the second downstream channel;
- a second position (II), wherein the first upstream channel is connected to the second upstream channel and the first and the second downstream channels are isolated.

12. A device according to Claim 11, wherein the pump valve has in addition a third position (III), wherein the first upstream channel is connected to the second downstream channel and the second upstream channel is connected to the first downstream channel.

13. A device according to Claim 10 and any one of Claims 11 and 12, wherein the second downstream channel (D) of the pump valve (32) is connected to the second downstream channel (D) of the charging valve (34); the device also comprising a control unit arranged so as to, in energy-recovery mode, place the pump valve in the third position (III) and the discharge valve in the first position (I).

14. A device according to any one of Claims 1 through 13, comprising at least two motors (16, 18), as well as circuit arrangements (62,44,74,60,15,17) capable of causing fluid to pass or not through said at least two motors, such that, in one configuration of the device, in accumulator-driven mode, the fluid under pressure drives in rotation at least a second motor in addition to a first motor; and in energy-recovery mode, said first and second motors are fed and the fluid leaving said first and second motors is injected into the accumulator.

15. A device according to any one of Claims 1 through 14, also comprising a control unit (11), arranged so as to, when said motor is to be driven in rotation, if the pressure (P1) in the accumulator is greater than a predetermined threshold, place the device in accumulator-driven mode.

16. An assembly (1) comprising a device (10,110) according to any one of Claims 1 through 15, a shaft (11, 13) and a mass (12, 14) mounted eccentrically on the shaft, capable of being driven in rotation around the shaft so as to cause it to vibrate, said motor being coupled to said mass.
